# EUROPEAN PATENT APPLICATION

(11) **EP 4 432 399 A1**
(43) Date of publication of application: **18.09.2024**
(21) Application number: 24152918.9
(22) Date of filing: 19.01.2024
(51) Int. Cl.: H01M 4/58

(54) **NEGATIVE ELECTRODE ACTIVE MATERIAL FOR FLUORIDE-ION BATTERY, NEGATIVE ELECTRODE ACTIVE MATERIAL LAYER FOR FLUORIDE-ION BATTERY, COMPOSITION FOR FORMING NEGATIVE ELECTRODE ACTIVE MATERIAL LAYER FOR FLUORIDE-ION BATTERY, FLUORIDE-ION BATTERY, METHOD FOR MANUFACTURING NEGATIVE ELECTRODE ACTIVE MATERIAL FOR FLUORIDE-ION BATTERY, AND METHOD FOR MANUFACTURING FLUORIDE-ION BATTERY**

(30) Priority: 15.03.2023 JP 2023041126
(71) Applicant: TOYOTA JIDOSHA KABUSHIKI KAISHA, Toyota-shi, Aichi-ken, 471-8571 (JP)
(72) Inventor: TOJIGAMORI, Takeshi, Toyota-shi, 471-8571 (JP)
(74) Representative: D Young & Co LLP

(57) **Abstract**

An object of the present disclosure is to provide a negative electrode active material for a fluoride-ion battery that can be formed of readily available materials, a fluoride-ion battery comprising such a negative electrode active material, a method for manufacturing such a negative electrode active material for a fluoride-ion battery, and a method for manufacturing a fluoride-ion battery comprising such a negative electrode active material. The present disclosure provides a negative electrode active material for a fluoride-ion battery, which is aluminum carbide.

## Description

### FIELD

The present disclosure relates to a negative electrode active material for a fluoride-ion battery, a negative electrode active material layer for a fluoride-ion battery, a composition for forming a negative electrode active material layer for a fluoride-ion battery, a fluoride-ion battery, a method for manufacturing a negative electrode active material for a fluoride-ion battery, and a method for manufacturing a fluoride-ion battery.

### BACKGROUND

Various materials have been proposed as a negative electrode active material (anode active material) for a fluoride-ion battery.

For example, PTL 1 discloses a fluoride-ion battery comprising a positive electrode active material layer, a negative electrode active material layer, and an electrolyte layer formed between the positive electrode active material layer and the negative electrode active material layer, wherein the negative electrode active material layer contains a negative electrode active material comprising Si element and La element and a solid electrolyte comprising a La element, Ba element, and F element.

### [CITATION LIST]

### [PATENT LITERATURE]

[PTL 1] Japanese Unexamined Patent Publication (Kokai) No. 2020-191252

### SUMMARY

### [TECHNICAL PROBLEM]

Various materials have been proposed as a negative electrode active material for a fluoride-ion battery. However, there is a demand for a novel negative electrode active material for a fluoride-ion battery that can be formed of readily available materials.

An object of the present disclosure is to provide a negative electrode active material for a fluoride-ion battery that can be formed of readily available materials, a fluoride-ion battery comprising such a negative electrode active material, a method for manufacturing such a negative electrode active material for a fluoride-ion battery, and a method for manufacturing a fluoride-ion battery comprising such a negative electrode active material.

### [SOLUTION TO PROBLEM]

The present inventors have discovered that the above object can be achieved by the following means.
<Aspect 1> A negative electrode active material for a fluoride-ion battery, which is aluminum carbide.
<Aspect 2> The negative electrode active material according to Aspect 1, wherein the aluminum carbide has been carried out a pretreatment of fluorination to 3 V (vs. Pb/PbF₂).
<Aspect 3> A negative electrode active material layer for a fluoride-ion battery, comprising the negative electrode active material according to Aspect 1 or 2.
<Aspect 4> A composition for forming a negative electrode active material layer for a fluoride-ion battery, comprising the negative electrode active material according to Aspect 1 or 2.
<Aspect 5> A fluoride-ion battery, comprising the negative electrode active material layer according to Aspect 3.
<Aspect 6> A method for manufacturing the negative electrode active material according to Aspect 2, comprising carrying out a pretreatment to fluorinate aluminum carbide to 3 V (vs. Pb/PbF₂).
<Aspect 7> A method for manufacturing the fluoride-ion battery according to Aspect 5, comprising carrying out a pretreatment to discharge an untreated fluoride-ion battery comprising aluminum carbide as a negative electrode active material so that voltage to 3 V (vs. Pb/PbF₂) is applied to aluminum carbide.

### [ADVANTAGEOUS EFFECTS OF INVENTION]

According to the present disclosure, a negative electrode active material for a fluoride-ion battery that can be formed of readily available materials, a fluoride-ion battery comprising such a negative electrode active material, a method for manufacturing such a negative electrode active material for a fluoride-ion battery, and a method for manufacturing a fluoride-ion battery comprising such a negative electrode active material can be provided.

### BRIEF DESCRIPTION OF DRAWINGS

FIG. 1 is a schematic diagram of the fluoride-ion battery of the present disclosure.
FIG. 2 is a graph showing discharge capacities to -2.4 V of the fluoride-ion batteries of the Examples and Reference Examples.
FIG. 3 is a graph showing charge-discharge curves of the fluoride-ion battery of Example 1.
FIG. 4 is a graph showing charge-discharge curves of the fluoride-ion battery of Example 2.

### DESCRIPTION OF EMBODIMENTS

Hereinafter, the embodiments of the present disclosure will be described in detail. It should be noted that the present disclosure is not limited to the following embodiments, and various modifications can be made within the scope of the disclosure.

### « Negative electrode active material for fluoride-ion battery »

The present disclosure provides a negative electrode active material for a fluoride-ion battery, which is aluminum carbide.

The present inventors have discovered that aluminum carbide (particularly represented by Al₄C₃) surprisingly functions as a negative electrode active material for a fluoride-ion battery.

The negative electrode active material may be aluminum carbide which has been carried out a pretreatment of fluorination to 3 V (vs. Pb/PbF₂). The pretreatment can further improve the charge and discharge capacities of a fluoride-ion battery having aluminum carbide as a negative electrode active material. The reason therefor, although not intended to be bound by any theory, is presumed as follows. Specifically, it is considered that by preliminarily applying a large voltage for fluorination, the aluminum-carbon bonds constituting aluminum carbide are broken and diffusibility of fluoride ions (F⁻) into aluminum carbide is improved.

In the present disclosure, aluminum carbide may be manufactured by a conventional method, or may be a commercially available material.

The form of the negative electrode active material is not particularly limited, and may be, for example, particulate.

The average particle size of the negative electrode active material is, for example, 10 nm to 100 µm, preferably 50 nm to 20 µm, and more preferably 100 nm to 10 µm.

### «Method for manufacturing negative electrode active material for fluoride-ion battery »

The method of the present disclosure for manufacturing a negative electrode active material for a fluoride-ion battery comprises carrying out a pretreatment to fluorinate aluminum carbide to 3 V (vs. Pb/PbF₂).

The negative electrode active material of the fluoride-ion battery releases fluoride ions during charging and receives fluoride ions during discharging.

The above description relating to the negative electrode active material of the present disclosure can be referenced regarding the aluminum carbide used as a raw material in the method of the present disclosure.

### <<Negative electrode active material layer for fluoride-ion battery>>

The negative electrode active material layer of the present disclosure comprises the negative electrode active material of the present disclosure.

When the fluoride-ion battery is a liquid-based fluoride-ion battery using a liquid electrolyte, the negative electrode active material layer for a fluoride-ion battery of the present disclosure can comprise the negative electrode active material of the present disclosure and optionally a conductive aid. When the fluoride-ion battery is a solid-state fluoride-ion battery using a solid electrolyte, the negative electrode active material layer of the present disclosure can comprise the negative electrode active material of the present disclosure and a solid electrolyte. The negative electrode active material layer for a fluoride-ion battery of the present disclosure can optionally comprise a binder and a conductive aid.

The content of the negative electrode active material in the negative active material electrode layer is preferably larger from the viewpoint of capacity. The ratio of the mass of the negative electrode active material relative to the mass of the negative electrode active material layer may be 10% by mass to 90% by mass, and is preferably 20% by mass to 80% by mass. The ratio of the mass of the negative electrode active material relative to the mass of the negative electrode active material layer may be 40% by mass or greater, 50% by mass or greater, or 60% by mass or greater, and is more preferably 60 to 70% by mass.

The content of the solid electrolyte in the negative active material electrode layer is preferably smaller from the viewpoint of capacity, and is preferably larger from the viewpoint of conductivity of fluoride ions. The ratio of the mass of the solid electrolyte relative to the mass of the negative electrode active material layer may be 15% by mass to 75% by mass, and is preferably 30% by mass to 60% by mass.

The content of the conductive aid in the negative active material electrode layer is preferably smaller from the viewpoint of capacity, and is preferably larger from the viewpoint of electron conductivity. The ratio of the mass of the conductive aid relative to the mass of the negative electrode active material layer may be 1% by mass to 40% by mass, and is preferably 2% by mass to 20% by mass.

Hereinafter, materials constituting the negative electrode active material layer for a fluoride-ion battery of the present disclosure will be described.

### (Solid electrolyte)

The solid electrolyte may be any solid electrolyte that can be used for a fluoride-ion battery.

Examples of the solid electrolyte include fluorides of lanthanoid elements such as La and Ce, fluorides of alkali metal elements such as Li, Na, K, Rd, and Cs, and fluorides of alkaline earth elements such as Ca, Sr, and Ba. The solid electrolyte may be a fluoride containing a plurality of a lanthanoid element, an alkali metal element, and an alkaline earth element.

Specific examples of the solid electrolyte include La_{(1 - x)}BaₓF_{(3 - x)} (0 ≤ x ≤ 1), Pb₍₁₋ₓ₎SnₓF₂ (0 ≤ x ≤ 1), Ca_{(1 - x)}BaₓF₂ (0 ≤ x ≤ 1), and Ce_{(1 - x)}BaₓF_{(3 - x)} (0 ≤ x ≤ 1). Each of the above x may be greater than 0, may be 0.1 or greater, may be 0.2 or greater, or may be 0.3 or greater. Further, each of the above x may be less than 1, may be 0.9 or less, may be 0.8 or less, or may be 0.7 or less.

The form of the solid electrolyte is not particularly limited, and may be, for example, particulate.

### (Binder)

The binder is not particularly limited, as long as the binder is chemically and electrically stable. Examples thereof can include fluoride binders such as polyvinylidene fluoride (PVDF) and polytetrafluoroethylene (PTFE).

### (Conductive aid)

The conductive aid is not particularly limited, as long as the conductive aid has the desired electron conductivity. Examples thereof can include carbon materials, examples of which can include carbon blacks such as acetylene black, Ketjen black, furnace black, and thermal black; and carbon nanotubes.

### <<Composition for forming negative electrode active material layer for fluoride-ion battery>>

The composition for forming a negative electrode active material layer for a fluoride-ion battery of the present disclosure comprises the negative electrode active material of the present disclosure.

When the fluoride-ion battery is a liquid-based fluoride-ion battery using a liquid electrolyte, the composition for forming a negative electrode active material layer for a fluoride-ion battery of the present disclosure can comprise the negative electrode active material of the present disclosure and optionally a conductive aid. When the fluoride-ion battery is a solid-state fluoride-ion battery using a solid electrolyte, the composition for forming a negative electrode active material layer for a fluoride-ion battery of the present disclosure can comprise the negative electrode active material of the present disclosure and a solid electrolyte. The composition for forming a negative electrode active material layer for a fluoride-ion battery of the present disclosure can optionally comprise a binder and a conductive aid.

The composition for forming a negative electrode active material layer for a fluoride-ion battery of the present disclosure may be in a slurry or paste-like state for forming a negative electrode active material layer. In this case, the composition can contain a dispersion medium for dispersing the negative electrode active material of the present disclosure. The composition for forming a negative electrode active material layer for a fluoride-ion battery of the present disclosure may be in a particulate state not containing a dispersion medium.

The above descriptions relating to the negative electrode active material layer for a fluoride-ion battery of the present disclosure can be referenced regarding the conductive aid when the fluoride-ion battery is a liquid-based fluoride-ion battery, and the solid electrolyte, binder, and conductive aid when the fluoride-ion battery is a solid-state fluoride-ion battery.

### «Fluoride-ion battery »

The fluoride-ion battery of the present disclosure comprises the negative electrode active material layer of the present disclosure.

The fluoride-ion battery of the present disclosure may be a liquid-based battery or a solid-state battery, and may particularly be an all-solid-state battery. In addition, the fluoride-ion battery of the present disclosure may be a primary battery, or may be a secondary battery. Examples of the form of the fluoride-ion battery of the present disclosure include coin type, laminate type, cylindrical type, and rectangular type.

When the fluoride-ion battery of the present disclosure is a liquid-based fluoride-ion battery using a liquid electrolyte, the fluoride-ion battery of the present disclosure can comprise a negative electrode active material layer, a separator layer, and a positive electrode active material layer in this order. Particularly in this case, the fluoride-ion battery of the present disclosure can comprise a negative electrode current collector layer, a negative electrode active material layer, a separator layer, a positive electrode active material layer, and a positive electrode current collector layer in this order.

When the fluoride-ion battery of the present disclosure is a solid-state fluoride-ion battery using a solid electrolyte, the fluoride-ion battery of the present disclosure can comprise a negative electrode active material layer, a solid electrolyte layer, and a positive electrode active material layer in this order. Particularly in this case, the fluoride-ion battery of the present disclosure can comprise a negative electrode current collector layer, a negative electrode active material layer, a solid electrolyte layer, a positive electrode active material layer, and a positive electrode current collector layer in this order.

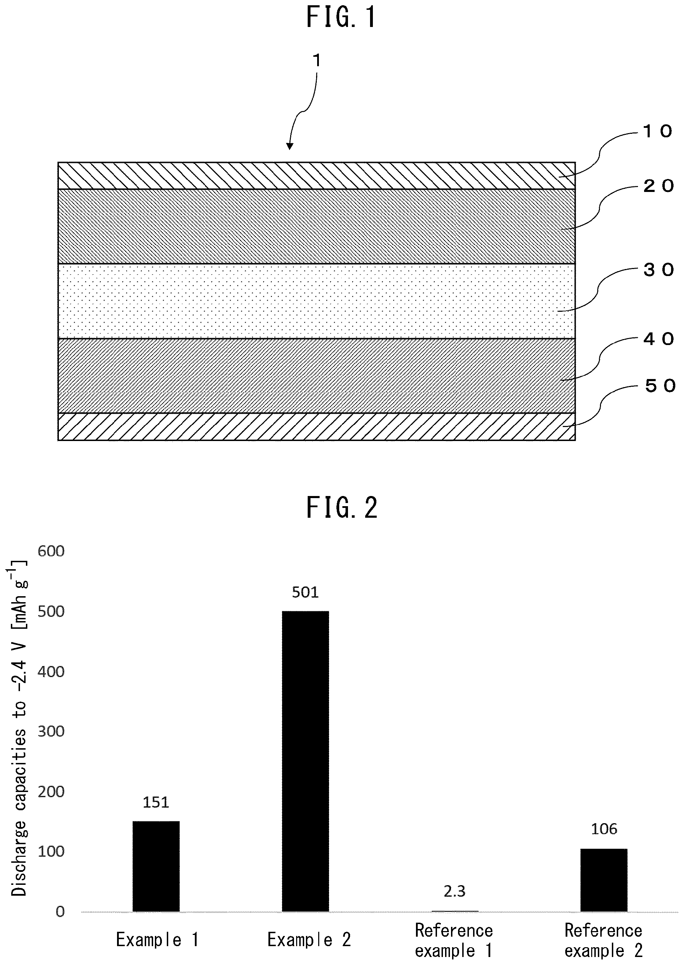

For example, as shown in FIG. 1, the solid-state fluoride-ion battery 1 of the present disclosure comprises a structure wherein a positive electrode current collector layer 10, a positive electrode active material layer 20, an electrolyte layer 30, a negative electrode active material layer 40, and a negative electrode current collector layer 50 are laminated in this order.

The fluoride-ion battery of the present disclosure may comprise a battery case housing the components thereof. The battery case may be of any form that can accommodate members of a fluoride-ion battery. A battery case used for a general battery can be adopted.

Hereinafter, each layer constituting the fluoride-ion battery of the present disclosure will be described.

### (Negative electrode current collector layer)

Examples of the material of the negative electrode current collector layer include stainless steel (SUS), copper, nickel, iron, titanium, platinum, and carbon. Examples of the form of the negative electrode current collector layer include a foil, a mesh, and a porous material.

### (Negative electrode active material layer)

The above description relating to the negative electrode active material layer of the present disclosure can be referenced regarding the negative electrode active material layer.

### (Solid electrolyte layer and separator layer)

When the fluoride-ion battery of the present disclosure is a liquid-based battery, the fluoride-ion battery of the present disclosure can comprise a separator layer as an electrolyte layer, and the separator layer may retain an electrolytic solution.

The electrolytic solution can contain, for example, a fluoride salt and an organic solvent. Examples of the fluoride salt can include inorganic fluoride salts, organic fluoride salts, and ionic liquids. As one example of the inorganic fluoride salt, XF (X is Li, Na, K, Rb, or Cs) can be included. As one example of the cation of the organic fluoride salt, an alkyl ammonium cation such as a tetramethylammonium cation can be included. The concentration of the fluoride salt in the electrolytic solution is, for example 0.1 mol% or greater and 40 mol% or less, and is preferably 1 mol% or greater and 10 mol% or less.

The organic solvent of the electrolytic solution is normally a solvent that dissolves a fluoride salt. Examples of the organic solvent can include glymes such as triethylene glycol dimethyl ether (G3) and tetraethylene glycol dimethyl ether (G4); cyclic carbonates such as ethylene carbonate (EC), fluoroethylene carbonate (FEC), difluoroethylene carbonate (DFEC), propylene carbonate (PC), and butylene carbonate (BC); and chain carbonates such as dimethyl carbonate (DMC), diethyl carbonate (DEC), and ethyl methyl carbonate (EMC). An ionic liquid may be used as the organic solvent.

The separator is not particularly limited, as long as the composition thereof is composed to withstand the use range of a fluoride-ion battery. Examples of the separator can include polymeric nonwoven fabrics such as polypropylene nonwoven fabrics and polyphenylene sulfide nonwoven fabrics; and microporous films of olefin-based resins such as polyethylene and polypropylene.

When the fluoride-ion battery of the present disclosure is a solid-state battery, the fluoride-ion battery of the present disclosure can comprise a solid electrolyte layer as the electrolyte layer. The above description relating to the negative electrode active material layer of the present disclosure can be referenced regarding the solid electrolyte constituting the solid electrolyte layer.

### (Positive electrode active material layer)

The positive electrode active material layer of the present disclosure contains a positive electrode active material.

When the fluoride-ion battery of the present disclosure is a liquid-based fluoride-ion battery using a liquid electrolyte, the positive electrode active material layer of the fluoride-ion battery of the present disclosure can comprise a positive electrode active material. When the fluoride-ion battery of the present disclosure is a solid-state fluoride-ion battery using a solid electrolyte, the positive electrode active material layer for a fluoride-ion battery of the present disclosure can comprise the positive electrode active material of the present disclosure and a solid electrolyte. The positive electrode active material layer for a fluoride-ion battery of the present disclosure can optionally comprise a binder and a conductive aid.

The positive electrode active material is an active material that is defluorinated during discharging. Examples of the positive electrode active material can include elemental metals, alloys, metal oxides, and fluorides thereof. Examples of the metal element contained in the positive electrode active material can include Cu, Ag, Ni, Co, Pb, Ce, Mn, Au, Pt, Ph, V, Os, Ru, Fe, Cr, Bi, Nb, Sb, Ti, Sn, and Zn. Of these, the positive electrode active material is preferably PbF₂, FeF₃, CuF2, BiF3, or AgF.

The above descriptions relating to the negative electrode active material layer of the present disclosure can be referenced regarding the solid electrolyte, binder, and conductive aid constituting the positive electrode active material layer.

The content of the positive electrode active material in the positive active material electrode layer is preferably larger from the viewpoint of capacity. The ratio of the mass of the positive electrode active material relative to the mass of the positive electrode active material layer may be 10% by mass to 90% by mass, and is preferably 20% by mass to 80% by mass. The above descriptions relating to the negative electrode active material layer of the present disclosure can be referenced regarding the contents of the solid electrolyte and the conductive aid in the positive active material electrode layer.

### (Positive electrode current collector layer)

Examples of the material of the positive electrode current collector layer include lead, stainless steel (SUS), aluminum, nickel, iron, titanium, platinum, and carbon. Examples of the form of the positive electrode current collector layer include a foil, a mesh, and a porous material.

### <<Method for manufacturing fluoride-ion battery>>

The method of the present disclosure for manufacturing a fluoride-ion battery comprises carrying out a pretreatment to discharge Al₄C₃ as a negative electrode active material to 3 V (vs. Pb/PbF₂).

The above description relating to the method for manufacturing a negative electrode active material for a fluoride-ion battery can be referenced regarding the method of pretreatment.

### EXAMPLES

### <<Production of fluoride-ion battery>>

### <Example 1>

A negative electrode active material (Al₄C₃ powder, manufactured by Kojundo Chemical Laboratory Co., Ltd.), a solid electrolyte (Ca_{0.5}Ba_{0.5}F₂: synthesized by ball-milling and mixing calcium fluoride (CaF₂, manufactured by Kojundo Chemical Laboratory Co., Ltd.) and barium fluoride (BaF₂, manufactured by Kojundo Chemical Laboratory Co., Ltd.) at 600 rpm for 20 h), and a vapor-grown carbon fibers (VGCF^{™}, manufactured by Showa Denko K.K.) as a conductive aid were mixed at a mass ratio of 19:19:2 using a ball mill (rotational speed: 200 rpm) to obtain a negative electrode mixture. For a counter electrode, an active material (PbF₂) and a conductive aid (acetylene black) were mixed at a mass ratio of 95:5 to obtain a counter electrode mixture. The above negative electrode mixture, a solid electrolyte (Ca_{0.5}Ba_{0.5}F₂) forming a solid electrolyte layer, the above counter electrode mixture, and a Pb foil were laminated in this order and subjected to powder compaction to produce an evaluation cell.

### <Example 2>

Except that a pretreatment to fluorinate Al4C3 as the negative electrode active material to 3 V (vs. Pb/PbF₂) was carried out before the charge-discharge test described below, an evaluation cell was produced in the same manner as in Example 1.

### <Reference Example 1>

Except that LaF₃ was used as the negative electrode active material, an evaluation cell was produced in the same manner as in Example 1.

### <Reference Example 2>

Except that LaSi was used as the negative electrode active material, an evaluation cell was produced in the same manner as in Example 1.

### <<Charge-discharge test>>

The produced evaluation cells were subjected to a charge-discharge test. The conditions of the charge-discharge test were set to a temperature of 200 °C, a negative electrode final potential of -2.5 V (vs. Pb/PbF₂) to 0 V (vs. Pb/PbF₂), and a current of 50 µA/cm².

### «Results»

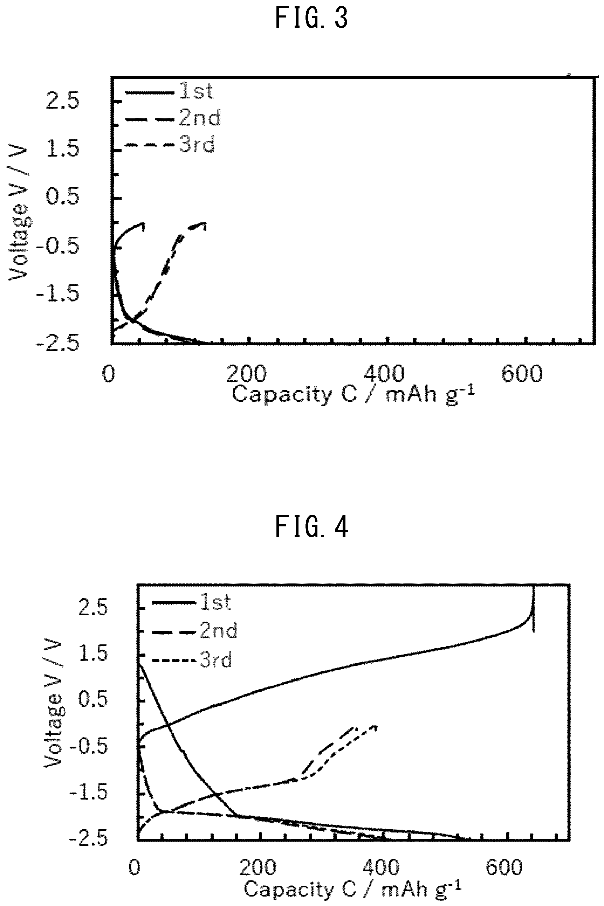

As shown in FIG. 2, Example 1 using Al4C3 as the negative electrode active material had a larger discharge capacity compared to Reference Example 1 using LaF3 and Reference Example 2 using LaSi. In addition, as shown in FIGS. 2 to 4, the discharge capacity was further improved in Example 2 wherein a pretreatment to fluorinate Al4C3 to 3 V (vs. Pb/PbF₂) was carried out, compared to Example 1.

### REFERENCE SIGNS LIST

- 1: fluoride-ion battery
- 10: positive electrode current collector layer
- 20: positive electrode active material layer
- 30: electrolyte layer
- 40: negative electrode active material layer
- 50: negative electrode current collector layer

## Claims

1. A negative electrode active material for a fluoride-ion battery, which is aluminum carbide.

2. The negative electrode active material according to claim 1, wherein the aluminum carbide has been carried out a pretreatment of fluorination to 3 V (vs. Pb/PbF₂).

3. A negative electrode active material layer for a fluoride-ion battery, comprising the negative electrode active material according to claim 1 or 2.

4. A composition for forming a negative electrode active material layer for a fluoride-ion battery, comprising the negative electrode active material according to claim 1 or 2.

5. A fluoride-ion battery, comprising the negative electrode active material layer according to claim 3.

6. A method for manufacturing the negative electrode active material according to claim 2, comprising carrying out a pretreatment to fluorinate aluminum carbide to 3 V (vs. Pb/PbF₂).

7. A method for manufacturing the fluoride-ion battery according to claim 5, comprising carrying out a pretreatment to discharge an untreated fluoride-ion battery comprising aluminum carbide as a negative electrode active material so that voltage to 3 V (vs. Pb/PbF₂) is applied to aluminum carbide.
